**Europäisches Patentamt**

**European Patent Office**

**Office européen des brevets**

(19)

(11) Veröffentlichungsnummer: **0 105 936**
A2

(12) ## EUROPÄISCHE PATENTANMELDUNG

(21) Anmeldenummer: **82108794.7**

(22) Anmeldetag: **23.09.82**

(51) Int. Cl.³: **B 62 D 53/08**, B 62 D 47/02

(30) Priorität: **17.09.82 DE 3234509**

(43) Veröffentlichungstag der Anmeldung: **25.04.84**
**Patentblatt 84/17**

(84) Benannte Vertragsstaaten: **BE CH DE FR GB IT LI LU NL SE**

(71) Anmelder: **Schultz, Rainer M., Lagerlöfstrasse 19, D-2000 Hamburg 65 (DE)**

(72) Erfinder: **Schultz, Rainer M., Lagerlöfstrasse 19, D-2000 Hamburg 65 (DE)**

(74) Vertreter: **Richter, Joachim, Dipl.-Ing. et al, Patentanwälte Richter u.Werdermann Neuer Wall 10, D-2000 Hamburg 36 (DE)**

(54) **Vorrichtung zur Fahrtstabilisierung von Sattelschlepp- und Gelenkfahrzeugen.**

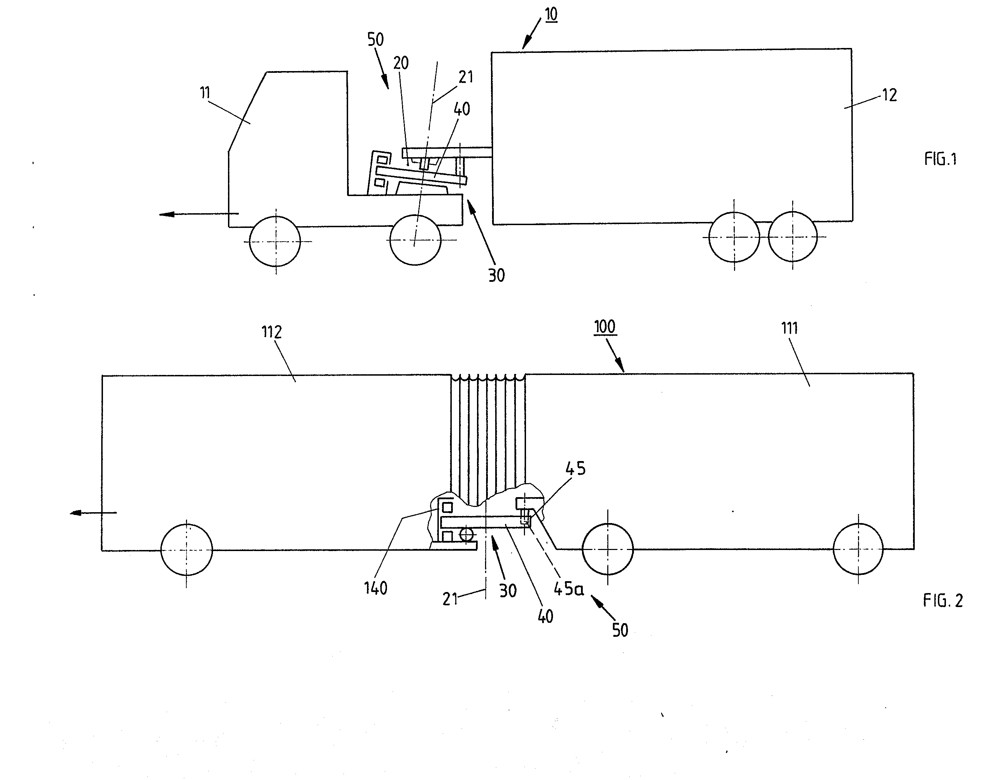

(57) Zur Verhinderung einer Über- bzw. Untersteuerung und eines unkontrollierten Verschwenkens des jeweils hinteren Fahrzeugteiles eines aus zwei über ein Drehgelenk miteinander verbundenen Fahrzeugteilen bestehenden Gelenkfahrzeuges und zur Erhöhung der Einknicksicherheit und der Seitenfahrstabilität derartiger Gelenkfahrzeuge ist die Vorrichtung derart ausgebildet, dass die beiden Fahrzeugteile (11, 12; 111, 112) über ein Drehgelenk (20) mit einer Abstützeinrichtung (30) verbunden sind, die aus einem auf einem (11; 111) der beiden Fahrzeugteile (11, 12; 111, 112) um eine senkrechte Achse (21) verdrehbaren, etwa waagerecht angeordneten Drehring (40) besteht, der mit dem jeweils anderen Fahrzeugteil (12; 112) formschlüssig verbunden ist und der mit dem ihn tragenden Fahrzeugteil (11, 111) vermittels einer Brems- und Blockiereinrichtung (140) kraft- oder formschlüssig verbindbar ist (Fig. 1).

- 1 -

BEZEICHNUNG GEÄNDERT
siehe Titelseite

Vorrichtung zur Verhinderung eines unbeabsichtigten Einknickens und zur Verbesserung der Seitenfahrstabilität
bei kritischen Straßen- und Fahrverhältnissen, die im Drehpunktbereich eines Gelenkfahrzeuges angeordnet und für
Sattelschleppfahrzeuge, Gelenkbusse oder Fahrzeuge mit nachlaufendem Fahrzeugteil geeignet ist.

Die Erfindung betrifft eine Vorrichtung zur Verhinderung
eines unbeabsichtigten Einknickens und zur Verbesserung
der Seitenfahrstabilität bei kritischen Straßen- und Fahrverhältnissen, die im Drehpunktbereich eines aus einem vorderen Fahrzeugteil und einem mit diesem gelenkig verbundenen
hinteren Fahrzeugteil, wobei eines der beiden Fahrzeugteile
motorangetrieben ist, bestehenden Gelenkfahrzeuges angeordnet
und für Sattelschleppfahrzeuge, Gelenkbusse oder Fahrzeuge
mit nachlaufendem Fahrzeugteil geeignet ist.

Gelenkfahrzeuge, wie z.B. Sattelschleppfahrzeuge, bestehen
aus einem Zugfahrzeug und hierauf aufgesatteltem nachlaufendem Anhänger. Dieser Nachläufer trägt das Ladegut
und überträgt seine Masse über eine oder mehrere Achsen
unmittelbar auf die Straße und mittelbar anteilig über
die Achsen des Zugfahrzeuges bzw. des Vorderwagens.

Durch die gelenkige Verbindung ist das Fahrzeug in Bezug
auf seine seitliche Fahrstabilität empfindlich. Das Verhältnis Radstand des Zugfahrzeuges zu dem Maß vom Aufliegerdrehpunkt bis Mitte Hinterachsaggregat beträgt bei
Sattelschleppfahrzeugen allgemein etwa 1:2. Der Masseschwerpunkt liegt jedoch, bedingt durch die Bauform, relativ

- 2 -

hoch und zwischen der Zugwagen-Hinterachse und dem Hinterachs-Aggregat des Nachläufers. Bei Beschleunigungs- und Verzögerungsvorgängen während der Fahrt kann sich hieraus ein instabiles Verhalten des Gesamtfahrzeuges ergeben. Der Kraftschluß zwischen den Rädern und der Straße ist dabei von erheblicher Bedeutung, insbesondere wenn große Haftungsunterschiede zwischen verschiedenen Rädern oder Achsen bestehen. Abhängig von der Fahrgeschwindigkeit, bei Bremsvorgängen oder Ausbrechen des Auflieger-Fahrzeuges besteht die Gefahr des horizontalen, nicht gewünschten Einknickens dieses Gelenkfahrzeuges.

Der Fahrverlauf auf einer horizontalen Ebene ergibt bei normalen Kraftschlußbedingungen eindeutige Beziehungen zwischen dem Lenkeinschlag der Vorderachse und dem Einknickwinkel des Sattelschleppers an seinem Aufliegerdrehpunkt. Hieraus ergibt sich auch der Kurvenverlauf des Fahrzeuges. Mit zunehmender Geschwindigkeit ist jedoch aus Sicherheitsgründen der zulässige Lenkwinkeleinschlag an der Vorderachse jeweils geringer zu halten. Entsprechend ergibt sich der zugehörige Winkel am Drehpunkt des Sattelaufliegers.

Das unbeabsichtigte Einknicken eines Gelenkfahrzeuges, wie z.B. eines Sattelschleppers, kann folgende Ursachen haben:
- unterschiedliche Haftwerte im Fahrverlauf und Massenkräfte,
- bei zu hoher Geschwindigkeit bewirken Massenkräfte über eine Hebelwirkung ein unbeabsichtigtes Einknicken (Untersteuerung)
- Schleuderwirkung bei mangelhafter Queradhäsion (Übersteuerung)

Die Erfindung löst die Aufgabe, eine Vorrichtung bei Gelenkfahrzeugen zu schaffen, mit der eine Übersteuerung und ein unkontrolliertes Verschwenken des jeweils hinteren Fahrzeugteiles eines aus zwei über ein Drehgelenk miteinander verbundenen Fahrzeugteilen bestehenden Gelenkfahr-

0105936

- 3 -

zeuges verhindert und mit der die Einknicksicherheit und
die Seitenstabilität derartiger Gelenkfahrzeuge erhöht
wird.

Zur Lösung dieser Aufgabe wird eine Vorrichtung gemäß der
eingangs beschriebenen Art vorgeschlagen, die erfindungsgemäß in der Weise ausgebildet ist, daß die beiden Fahrzeugteile über ein Drehgelenk mit einer Abstützeinrichtung verbunden sind, die aus einem auf einem der beiden Fahrzeugteile
um eine senkrechte Achse verdrehbaren, etwa waagerecht angeordneten Drehring besteht, der mit dem jeweils anderen Fahrzeugteil formschlüssig verbunden ist und der mit dem ihn tragenden Fahrzeugteil vermittels einer Brems- und Blockiereinrichtung kraft- oder formschlüssig verbindbar ist.

Eine besonders vorteilhafte Ausführungsform der Erfindung
sieht eine Ausgestaltung vor, nach der die Abstützeinrichtung einen Drehring, der horizontal und konzentrisch zur
Drehachse der die beiden Fahrzeugteile miteinander verbindenden Gelenkkupplung, wie Sattelkupplung, Kugelkupplung
od.dgl., angeordnet und über an einem der beiden Fahrzeugteile vorgesehene Rollen drehbar gelagert ist, eine an dem
Fahrzeugteil vorgesehene, den Drehring mit diesem Fahrzeugteil verbindende Brems- und Blockiereinrichtung, die als
schaltbare und kraftschlüssig mechanisch, elektromagnetisch
oder mit anderen, die gleiche Wirkung erzielenden Mitteln
arbeitende Kupplung oder Scheibenbremse ausgebildet ist,
und eine das andere Fahrzeugteil mit dem Drehring formschlüssig verbindende Einrichtung, wie formschlüssig in
eine Bohrung, Durchbohrung, randseitige Ausnehmung od.dgl.
in den Drehring eingreifende Verbindungszapfen, Bolzen od.dgl.
aufweist.

Mit einer derart ausgebildeten Vorrichtung ist durch abstützende Elemente, wie z.B. dem Drehring mit hydraulischer
oder pneumatischer Einfallbremse, die Möglichkeit geschaffen,
bei einem Sattelschleppfahrzeug den Sattelauflieger kraft-

- 4 -

schlüssig so zu verbinden, daß ein unbeabsichtigtes Einknicken nicht mehr stattfinden kann. In den kritischen Bereichen des Fahrgeschehens wird die notwendige Kraftschlüssigkeit herbeigeführt und somit die Einknicksicherheit gewährleistet. Die Abstützeinrichtung besteht somit auf der einen Seite aus einer Einfallbremse am vorderen Fahrzeugteil und auf der Gegenseite aus einem formschlüssig an dem Drehring angreifenden Mitnehmer als Gegenlagerung für das hintere Fahrzeugteil, z.B. am Sattelauflieger eines Sattelschleppfahrzeuges, wobei jedoch auch eine umgekehrte Anordnung möglich ist.

Die Knickwinkelbegrenzungsvorrichtung weist eine konstruktive Ausgestaltung auf, die den Einbau in Sattelschleppfahrzeugen mit Standard-Sattelschlepperkupplung, wie diese universell im Einsatz ist, ermöglicht, ohne daß hierbei das Trennen oder Kuppeln beeinträchtigt wird. Die Hauptteile der Vorrichtung sind in dem Motorwagen ein- bzw. aufgebaut, während an dem Sattelauflieger lediglich Widerlager anzubringen sind, welche die formschlüssige Abstützung zu übernehmen haben. Dabei ist eine Beweglichkeit in Fahrtrichtung um die Hochachse von $\pm$ 10° zu berücksichtigen. Das Widerlager an dem Sattelanhänger ist zur Entriegelung schwenkbar vorgesehen, um den Einkuppelvorgang des abgesattelten Fahrzeuges ohne Rücksicht auf die Winkelstellung der Fahrzeuge zueinander vollziehen zu können. Der Mitnehmer kann anschließend in einer annähernd Geradeaus-Stellung eingerastet werden.

Gelenkfahrzeug-Verbindungen sind formschlüssig zur Übertragung der Fahr- und Bremskräfte zwischen dem vorderen und hinteren Fahrzeugteil angeordnet. Diese Verbindung erfordert eine Bewegungsfreiheit in drei Ebenen:
- Um die vertikale Hochachse sind bei Sattelschlepp - Fahrzeugen, je nach Aufbau-Begrenzungen , bis zu 135°- Einschlag möglich;
- in Fahrzeug-Längsrichtung müssen Einknickungen am Gelenk von $\pm$ 10° ermöglicht werden;

- eine elastische Verdrehbarkeit an dem Gelenk um die Fahrzeuglängsachse soll dabei maximal 5° nicht überschreiten.

Zur Gewährleistung der Seitenstabilität unter kritischen Fahrverhältnissen sieht die Knickwinkelbegrenzungsvorrichtung die Einschaltung einer Dämpfung oder die zeitweilige Blockierung beider Fahrzeugteile gegeneinander vor. Als Element hierfür wird ein Drehring verwendet, der horizontal um den Gelenkmittelpunkt drehbar derart gelagert ist, daß im Innenkreis horizontal angeordnete Nutrollen den Drehring tragen und führen. Das Fahrzeugvorderteil oder vorzugsweise der Motorwagen trägt diesen Drehring, und zwar direkt oder indirekt, während das hintere Fahrzeugteil oder vorzugsweise das nicht motorangetriebene hintere Fahrzeugteil eine formschlüssige Verbindung mit dem Drehring erhält. Diese formschlüssige Verbindungseinrichtung kann fest montiert oder auch ein- und ausrückbar sein. Am anderen Fahrzeugteil ist eine ansteuerbare, kraftschlüssige oder auch formschlüssige Einrichtung montiert, die im Bedarfsfall eine Verriegelung oder Dämpfung beider Fahrzeugteile bewirkt und somit für eine Verbesserung der seitlichen Fahrstabilität sorgt. Dieses Bauelement kann als Reibungsbremse oder als elektromagnetische Bremse ausgebildet sein. Zur formschlüssigen Verbindung zwischen dem hinteren Fahrzeugteil und dem Drehring kann ein Zapfen, ein Bolzen oder eine Verzahnung mit dem Drehring in Eingriff gebracht werden.

Die Verwendung eines Drehringes bei der Knickwinkelbegrenzungsvorrichtung hat den Vorteil, daß, unabhängig vom Einschlagwinkel am Gelenk, immer die gleiche Angriffsfläche zur Verfügung steht. Die Anbringung des Verriegelungselementes am Motorwagen empfiehlt sich wegen der Energiebereitstellung für eine evtl. Fernbedienung, die andernfalls erst durch Schlauch- oder Kabelverbindungen zum motorlosen Fahrzeugteil hergestellt werden müßte. Eine Umkehrung der Anordnung zwischen dem vorderen und dem hinteren Fahrzeugteil ist ebenfalls möglich.

- 6 -

Um bei extremen Stellungen vom Motorwagen zum einzukuppelnden Anhänger die Verriegelung zum Drehkreis zu ermöglichen, kann eine zusätzliche Ein- und Ausrückungsmitnahme vorgesehen sein, die sich besonders vorteilhaft bei Sattelschleppfahrzeugen anwenden läßt.

Vorteilhafte Weiterbildungen der Erfindung sind in den Unteransprüchen beschrieben.

Im folgenden wird der Gegenstand der Erfindung in den Zeichnungen erläutert. Es zeigt

Fig. 1   in einer schematischen Seitenansicht ein Sattelschleppfahrzeug mit einer Knickwinkelbegrenzungsvorrichtung,

Fig. 2   in einer schematischen Seitenansicht einen Gelenkbus mit der Knickwinkelbegrenzungsvorrichtung,

Fig. 3   in einer schaubildlichen Ansicht die Abstützeinrichtung mit der Brems- und Blockiereinrichtung der Knickwinkelbegrenzungsvorrichtung,

Fig. 4   in einer schematischen Darstellung eine Belastungsmeßeinrichtung der Knickwinkelbegrenzungsvorrichtung, und

Fig. 5   in einer schaubildlichen Ansicht eine weitere Aus-führungsform der Belastungsmeßeinrichtung der Knickwinkelbe-grenzungsvorrichtung.

Das in Fig. 1 dargestellte Sattelschleppfahrzeug 10, bestehend aus dem vorderen Fahrzeugteil 11 als Zugfahrzeug und dem hinteren Fahrzeugteil 12 als nachlaufender Anhänger und der in Fig. 2 dargestellte, ebenfalls aus einem vorderen Fahrzeugteil 111 und einem hinteren motorangetriebenen Fahrzeugteil 112 bestehende Gelenkbus 100 sind im Bereich ihrer Drehgelenke bzw. Gelenkkupplung 20 mit einer Knickwinkelbegrenzungsvorrichtung 50 versehen, die aus einer

0105936

- 7 -

Abstützeinrichtung 30 und einer Brems- und Blockiereinrichtung 140 in Form einer Einfallbremse besteht.

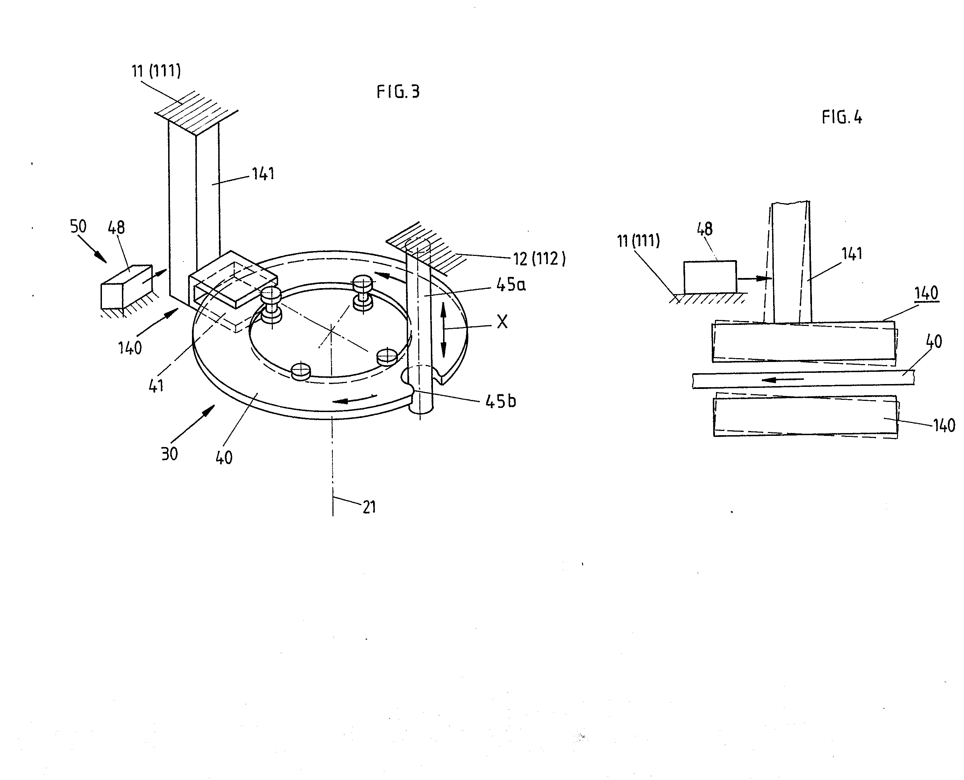

Diese Abstützeinrichtung 30 ist im Bereich des Drehgelenkes bzw. der Gelenkkupplung 20 für die beiden Fahrzeugteile 11,12 bzw. 111,112 der Gelenkfahrzeuge 10 bzw. 100 angeordnet und besteht aus einem auf bzw. an dem Fahrzeugteil 11 bzw. 111 angeordneten, um eine senkrechte Achse 21 verdrehbaren Drehring 40, der vermittels in Fig. 3 bei 41 angedeuteter, freilaufend gelagerter Rollen geführt und gehalten ist. Dieser Drehring 40 ist vermittels einer Brems- und/oder Blockiereinrichtung 140 kraft- oder formschlüssig mit dem Fahrzeugteil 11 bzw. 111 verbindbar. Diese Brems- und/oder Blockiereinrichtung 140 ist beispielsweise als Einfallbremse ausgebildet und ist mechanisch, elektrisch, pneumatisch, hydraulisch oder elektromagnetisch getrieben, jedoch auch andere Einrichtungen oder Mittel können zur Anwendung gelangen, mit denen die gleiche Brems- bzw. Blockierwirkung erreicht wird. Die Brems- und/oder Blockiereinrichtung 140 wirkt direkt auf den Drehring 40 und bei Inbetriebnahme der Vorrichtung 140 erfolgt ein Abbremsen oder Festhalten des Drehringes 40 bei Überschreiten eines vorgegebenen und festgelegten Drehbereiches, wobei dieses Abbremsen bis zu einem Blockieren durchführbar ist, wodurch eine Begrenzung des Knickwinkels erreicht wird.

Das jeweils andere Fahrzeugteil, im vorliegenden Fall das hintere Fahrzeugteil 12 bzw. 112 des Gelenkfahrzeuges 10 bzw. 100, ist formschlüssig mit dem Drehring 40 verbunden, wobei diese formschlüssige Verbindung vermittels einer Einrichtung 45 erreicht wird, die aus einem Zapfen, einem Bolzen od.dgl. 45a besteht, die in eine im Drehring 40 vorgesehene Bohrung, Durchbohrung, randseitige Ausnehmung od.dgl. 45b eingreift (Fig.3). Dieser Bolzen, Zapfen od.dgl. 45a an dem hinteren Fahrzeugteil 12 bzw. 112 ist vermittels in der Zeichnung nicht dargestellter, elektromotorischer, pneumatischer, mechanischer oder hydraulisch betätigbarer Einrichtungen in Pfeilrichtung X ein- und ausfahrbar ausgebildet, so daß das Trennen oder Kuppeln der beiden Fahrzeugteile 11,12 bzw. 111,112 in keiner Weise beeinträchtigt wird.

Der Drehring 40 ist als Kreisring ausgebildet und etwa waagerecht liegend an dem vorderen Fahrzeugteil 11 bzw. 111 vorgesehen. Der Drehring 40 ist um den Gelenkmittelpunkt 21 drehbar auf dem Fahrzeugteil 11 bzw. 111 derart gelagert, daß in seinem Innenkreis horizontal angeordnete Nutrollen, die in Fig. 3 bei 41 angedeutet sind, den Drehring 40 tragen und führen.

Das die aus der Abstützeinrichtung 30 und der Brems- und Blockiereinrichtung140 bestehende Knickwinkelbegrenzungsvorrichtung 50 tragende Fahrzeugteil 11,111 trägt die Belastungsmeßeinrichtung 48,148 , mit der es möglich ist, zur Abtastung und Messung des jeweiligen Betriebszustandes der Vorrichtung eine diesen Betriebszustand entsprechend kennzeichnende Meßgröße aufzunehmen. Bei einem Bremsvorgang bzw. bei einem blockierenden Festhalten des Drehringes 40 durch die Brems- und Blockiereinrichtung 140 treten in der Vorrichtung entsprechende statische bzw. dynamische Belastungen auf, die ganz bestimmten Fahrzuständen des jeweils anderen Fahrzeugteiles, im vorliegenden Fall des Fahrzeugteiles 12 bzw. 112 des Gelenkfahrzeuges 10 bzw. 100 zugeordnet werden können. Außerdem können den Betriebszuständen der Brems- und Blockiereinrichtung 140, die im wesentlichen mit einem Brems- bzw. Festhaltevorgang bei einem Ausschwenken des jeweils anderen Fahrzeugteiles 12 bzw. 112, mit einem Brems- bzw. Blockiervorgang bei einem Einschwenken des jeweils anderen Fahrzeugteiles 12 bzw. 112, mit einem Festhaltevorgang bei einem momentan keinerlei Schwenkbewegung durchführenden hinteren Fahrzeugteil 12 bzw. 112 und mit einem Freilauf-Betriebszustand gekennzeichnet werden können, aufgrund von Materialelastizitäten in der Halterungsvorrichtung 141 der Brems- und Blockiereinrichtung 140 Relativbewegungen zum die Brems- und Blockiereinrichtung 140 tragenden Fahrzeugteil 11 bzw. 111 zugeordnet werden. Diese Relativbewegungen bzw. Relativverschiebungen werden von der Belastungsmeßeinrichtung 48 lichtoptisch oder akustisch aufgenommen und gemessen und in ein entsprechendes Steuersignal für eine in der Zeichnung nicht dargestellte Knickwinkelbegrenzungssteuerungsvorrichtung umgewandelt. Hierdurch wird erreichbar, daß der mit dem Ende einer Ausschwenkbewegung beispielsweise des hinteren Fahrzeugteils 12 bzw. 112 und dem sich anschließenden Wiedereinschwenken dieses Fahrzeugteils verbundene Lastwechsel in der Brems- bzw. Blockiereinrichtung 140 gemessen wird, und hierdurch einer Knickwinkelbegrenzungssteuerungsvorrichtung ein entsprechendes Meßsignal zur Verfügung gestellt wird, so daß es möglich wird, bei einem solchen Lastwechsel einen eingeleiteten Bremsvorgang zu beenden, um ein schnelleres Wiedereinschwenken zu gewährleisten.

Die Arbeitsweise einer Belastungsmeßeinrichtung ist anhand von Fig. 4 dargestellt, in der eine Teilansicht der Brems- und Blockiereinrichtung 140 und die rein schematisch dargestellte, die Brems- und Blockiereinrichtung 140 tragende Halterungseinrichtung 141 und die fest mit dem Fahrzeugteil 11 bzw. 111 verbundene Belastungsmeßeinrichtung 48 dargestellt sind. Eine Abbremsung des sich drehenden Drehrings 40 durch die Brems- und Blockiereinrichtung 140 ergibt eine elastische Verformung der Halterungseinrichtung 141, wie sie durch die gestrichelten Linien rein schematisch angedeutet ist. Diese relative Verschiebung zwischen Fahrzeugteil 11 bzw. 111 und der Halterungseinrichtung 141 wird von der Belastungsmeßeinrichtung 48 aufgenommen und in ein entsprechendes Meß- bzw. Steuersignal verwandelt.

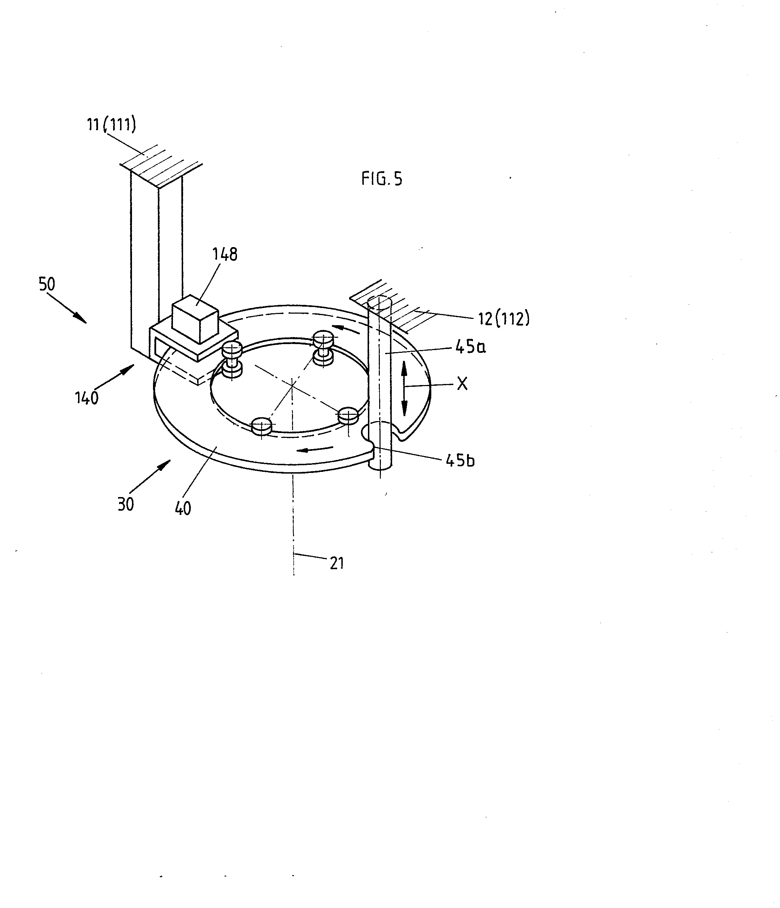

Bei der in Fig. 5 dargestellten Abstützeinrichtung 30 mit der Brems- und Blockiereinrichtung 140 der Knickwinkelbegrenzungsvorrichtung ist die Brems- und Blockiereinrichtung 140 mit einer Druckmeßeinrichtung 148 versehen, die den jeweiligen Betriebszustand der Brems- und Blockiereinrichtung 140 mißt und in eine entsprechendes Steuersignal für eine in der Zeichnung nicht dargestellte Knickwinkelbegrenzungssteuerungsvorrichtung umwandelt.

Eine Umkehrung der Anordnung der die Knickwinkelbegrenzungsvorrichtung 50 ausmachenden Teile an den beiden Fahrzeugteilen der Gelenkfahrzeuge 10,100 ist möglich. So kann der Drehring 40 auch an dem jeweils hinteren Fahrzeugteil 12 bzw. 112 angeordnet sein, das dann die Brems- und Blockiereinrichtung 140 trägt, welche unmittelbar auf den Drehring 40 einwirkt, während die Einrichtung 45 zur Herstellung der formschlüssigen Verbindung zwischen dem vorderen Fahrzeugteil 11 bzw. 111 vorgesehen ist.

Die Erfindung ist nicht beschränkt auf die vorangehend beschriebenen und in der Zeichnungen dargestellten Ausführungsformen. Abweichungen in der Anordnung und Lagerung des Drehringes der Knickwinkelbegrenzungsvorrichtung 50 liegen ebenso im Rahmen der Erfindung wie eine andersartige Ausgestaltung der mit dem Drehring 40 zusammenwirkenden Brems- und Blockiereinrichtung 140.

- 11 -

Patentansprüche

1. Vorrichtung zur Verhinderung eines unbeabsichtigten Einknickens und zur Verbesserung der Seitenfahrstabilität bei kritischen Straßen- und Fahrverhältnissen, die im Drehpunktbereich eines aus einem vorderen Fahrzeugteil und einem mit diesem gelenkig verbundenen hinteren Fahrzeugteil, wobei eines der beiden Fahrzeugteile motorangetrieben ist, bestehenden Gelenkfahrzeuges angeordnet und für Sattelschleppfahrzeuge, Gelenkbusse oder Fahrzeuge mit nachlaufendem Fahrzeugteil geeignet ist, dadurch gekennzeichnet, daß die beiden Fahrzeugteile (11,12;111,112) über ein Drekgelenk (20) mit einer Abstützeinrichtung (30) verbunden sind, die aus einem auf einem (11;111) der beiden Fahrzeugteile (11,12;111,112) um eine senkrechte Achse (21) verdrehbaren, etwa waagerecht angeordneten Drehring (40) besteht, der mit dem jeweils anderen Fahrzeugteil (12;1112) formschlüssig verbunden ist und der mit dem ihn tragenden Fahrzeugteil (11,111) vermittels einer Brems- und Blockiereinrichtung (140) kraft- oder formschlüssig verbindbar ist.

2. Vorrichtung nach Anspruch 1, dadurch gekennzeichnet, daß die Abstützeinrichtung (30) einen Drehring (40), der horizontal und konzentrisch zur Drehachse (21) der die beiden Fahrzeugteile (11,12;111,112) miteinander verbindenden Gelenkkupplung (20), wie Sattelkupplung, Kugelkupplung od.dgl. angeordnet und über auf einem (11;111) der beiden Fahrzeugteile (11,12;111,112) vorgesehene Rollen (41) drehbar gelagert ist, eine an dem Fahrzeugteil (11;111) vorgesehene, den Drehring (40) mit diesem Fahrzeugteil (11;111) verbindende Brems-und Blockiereinrichtung (140) , die als schaltbare und kraftschlüssig mechanisch, elektromagnetisch oder mit anderen, die gleiche Wirkung erzielenden Mitteln arbeitende Kupplung ode5 Scheibenbremse ausgebildet ist, und eine das andere Fahrzeugteil (12;112) mit dem Drehring (40) formschlüssig verbindende Einrichtung (45) wie formschlüssig in eine Bohrung, Durchbohrung, randseite Ausnehmung od.dgl. (45b) in den Drehring (40) eingreifende Verbindungszapfen, Bolzen od.dgl. (45a) aufweist.

3. Vorrichtung nach Anspruch 1 und 2, dadurch gekennzeichnet, daß die Vorrichtung (50) mit einer Belastungsmeßeinrichtung (48,148) zur Abtastung und Messung einer den Betriebszustand der Vorrichtung (50) kennzeichnenden Meßgröße versehen ist.

4. Vorrichtung nach Anspruch 3, dadurch gekennzeichnet, daß die Belastungsmeßeinrichtung aus einer lichtoptischen oder akustischen Meßvorrichtung (48) zur Abtastung der belastungsabhängigen Relativbewegung zwischen dem Fahrzeugteil (11;111) und der Brems- und Blockiereinrichtungstraghalterung (141) besteht.

5. Vorrichtung nach Anspruch 3, dadurch gekennzeichnet, daß die Belastungsmeßeinrichtung aus einer drucksensorischen Meßeinrichtung (148) besteht.

FIG.1

FIG. 2

0105936

FIG. 3

FIG. 4

11 (111)

141

50 48

140

41

30 40

21

12 (112)

45a

X

45b

11 (111)

48

141

140

40

140

0105936

11(111)

50

148

140

30 40

21

FIG.5

12(112)

45a

X

45b